# EUROPEAN PATENT APPLICATION

(11) **EP 4 789 949 A1**
(43) Date of publication of application: **12.08.2026**
(21) Application number: 24874047.4
(22) Date of filing: 10.09.2024
(51) Int. Cl.: B62D 1/19, B62D 1/181

(54) **COLLAPSIBLE ENERGY-ABSORBING MECHANISM FOR ELECTRICALLY ADJUSTABLE STEERING COLUMN**

(30) Priority: 07.10.2023 CN 202322670789 U
(71) Applicant: Bosch Huayu Steering Systems (Yantai) Co., Ltd., Shandong 265500 (CN)
(72) Inventor: ZHU, Feng, Yantai, Shandong 265500 (CN); DONG, Yaqi, Yantai, Shandong 265500 (CN); WANG, Ke, Yantai, Shandong 265500 (CN)
(74) Representative: Hannke Bittner & Partner mbB Regensburg
(86) International application number: PCT/CN2024/117943
(87) International publication number: WO 2025/073228

(57) **Abstract**

The present application relates to the technical field of steering systems, and in particular to a collapsible energy-absorbing mechanism for an electrically adjustable steering column. The collapsible energy-absorbing mechanism comprises an upper column, a lower column, and a driving mechanism. A sliding component is slidably connected to the driving mechanism. The sliding component is connected to one end of a metal belt by means of bolts. A guide holder is sleeved on the other end of the metal strip. The guide holder is fixedly connected to the upper column by a rivet. The collapsible energy-absorbing mechanism effectively solves the problem of absorbing impact energy during vehicle collision and reducing damage to drivers, and improves independence and stability of the collapsible energy-absorbing function.

## Description

### SPECIFICATION

The present application claims priority to Chinese Patent Application No. 2023226707899, filed on October 7, 2023. The aforementioned Chinese patent application is incorporated herein by reference in its entirety.

### TECHNICAL FIELD

The present disclosure relates to the technical field of steering systems, and specifically to a collapsible energy-absorbing mechanism for an electrically adjustable steering column.

### BACKGROUND

Current automotive steering systems are trending toward electrification, intelligence, and networking, and a type of steering column used for electrically adjusting the position of a steering wheel is being increasingly widely applied. An electrically adjustable steering column must satisfy the function of automatically adjusting the position of the steering wheel when powered on, and must also satisfy the requirement of absorbing sufficient energy during a vehicle collision, such that the degree of injury to a vehicle driver subjected to a violent impact from the steering wheel is reduced as much as possible. When the electrically adjustable column is powered on, a driving assembly needs to be connected to an upper column or an upper steering shaft to achieve the function of adjusting the position of the steering wheel; when the electrically adjustable column is not powered on, the electrically adjustable steering column for the steering wheel must withstand a sufficiently large force to maintain its position without moving; during a vehicle collision, a collapsible energy-absorbing mechanism of the electrically adjustable column must absorb sufficient impact energy to protect the safety of the driver.

According to the technologies known to date, for an electrically adjustable column, a collapsible energy-absorbing mechanism is connected to its driving mechanism to perform adjustment when powered on, maintain the position of the steering wheel when not powered on, and continuously absorb energy by collapsing during a vehicle collision. The collapsible energy-absorbing mechanism integrates the above functions, resulting in a complex structure with many unstable factors, which easily leads to undesired energy absorption during a vehicle collision. Specifically, the following situation may occur: when the collapsible energy-absorbing mechanism maintains the position of the steering wheel, it may shift or deform due to external forces, causing the collapsible energy-absorbing mechanism to become unstable and unable to comply with the previously defined design specifications, thereby resulting in undesired energy absorption during a vehicle collision.

### SUMMARY

To overcome the deficiencies of the prior art, the present disclosure provides a collapsible energy-absorbing mechanism for an electrically adjustable steering column, which effectively addresses the issue of absorbing impact energy during a vehicle collision and reducing driver injury, while also enhancing the independence and stability of the collapsible energy-absorbing function.

To achieve the above objective, a collapsible energy-absorbing mechanism for an electrically adjustable steering column is designed, comprising an upper column, a lower column, and a driving mechanism. A sliding component is slidably connected to the driving mechanism, and the sliding component is connected to one end of a metal strip by means of a bolt. A guide holder is sleeved on the other end of the metal strip, and the guide holder is fixedly connected to the upper column by means of a rivet.

The metal strip is provided as a "J"-shaped structure. One end of the metal strip is bent outward and forms a U-shaped hollow structure, and the bolt passes through the hollow structure to be fixedly connected to a bottom of the sliding component. The other end of the metal strip is provided as a flat structure, and an obround hole is provided transversely in a middle of the flat structure.

The guide holder is provided as a U-shaped structure and is sleeved transversely on the other end of the metal strip, and the rivet passes through both the guide holder and the other end of the metal strip to be fixedly connected to the upper column.

An outer side of a lower portion of the sliding component is connected to one end of a fixing bracket by means of a bolt, and the other end of the fixing bracket is fixedly connected to the upper column by means of a fastener.

A lower column is sleeved on an outer side of the upper column, and a hollow slot is provided on the lower column.

The fixing bracket is provided as a U-shaped structure, where an upper portion of the fixing bracket wraps around the outer side of the lower portion of the sliding component, and a bottom of the fixing bracket is fixedly connected to the upper column by means of a fastener.

At least one fastener is provided.

Compared with the prior art, the present disclosure provides a collapsible energy-absorbing mechanism for an electrically adjustable steering column, which effectively addresses the issue of absorbing impact energy during a vehicle collision and reducing driver injury, while also enhancing the independence and stability of the collapsible energy-absorbing function. The realization of the adjustment function and the realization of the collapsible energy-absorbing function of this collapsible energy-absorbing mechanism are relatively independent. Therefore, when the collapsible energy-absorbing mechanism maintains the position of the steering wheel, the metal strip will not deform due to external forces, which is conducive to ensuring the stability of the collapsible energy-absorbing function of the collapsible energy-absorbing mechanism, enabling the expected energy absorption effect to be achieved.

### BRIEF DESCRIPTION OF THE DRAWINGS

FIG. 1 and FIG. 2 are schematic diagrams illustrating the collapsible energy-absorbing mechanism of the present disclosure installed on a steering column.
FIG. 3 is an exploded structural view of the collapsible energy-absorbing mechanism in the present disclosure.
FIG. 4 is a schematic structural view showing the connection between the metal strip and the guide holder.
FIG. 5 is a schematic view of a part of the structure of the collapsible energy-absorbing mechanism in the present disclosure installed on the steering column, showing the sliding component, the metal strip, the guide holder, and the fixing bracket.
FIG. 6 is a schematic view of another part of the structure of the collapsible energy-absorbing mechanism in the present disclosure installed on the steering column, showing the sliding component and the fixing bracket.
FIG. 7 is a schematic view of another part of the structure of the collapsible energy-absorbing mechanism in the present disclosure installed on the steering column, showing the metal strip, the guide holder, and the fixing bracket, wherein the upper column is hidden in FIG. 7.
FIG. 8 is a schematic view of another part of the structure of the collapsible energy-absorbing mechanism in the present application installed on the steering column, showing the sliding component, the metal strip, the guide holder, and the fixing bracket, wherein the upper column is hidden in FIG. 8.
FIG. 9 is a schematic view of another part of the structure of the collapsible energy-absorbing mechanism in the present application installed on the steering column, showing the metal strip, the guide holder, and the fixing bracket.

### DETAILED DESCRIPTION OF THE PREFERRED EMBODIMENT

The present disclosure is further described below with reference to the drawings.

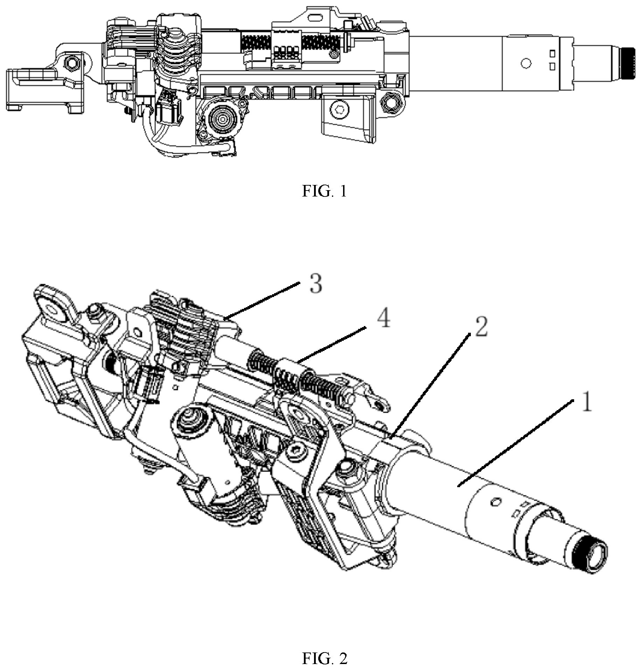

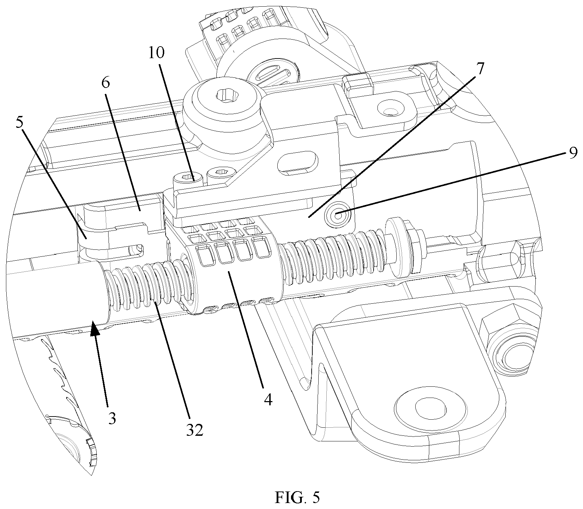

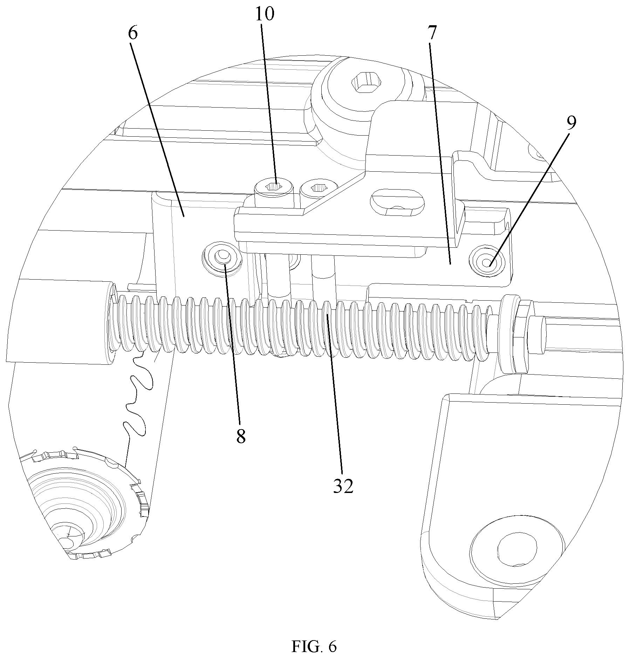

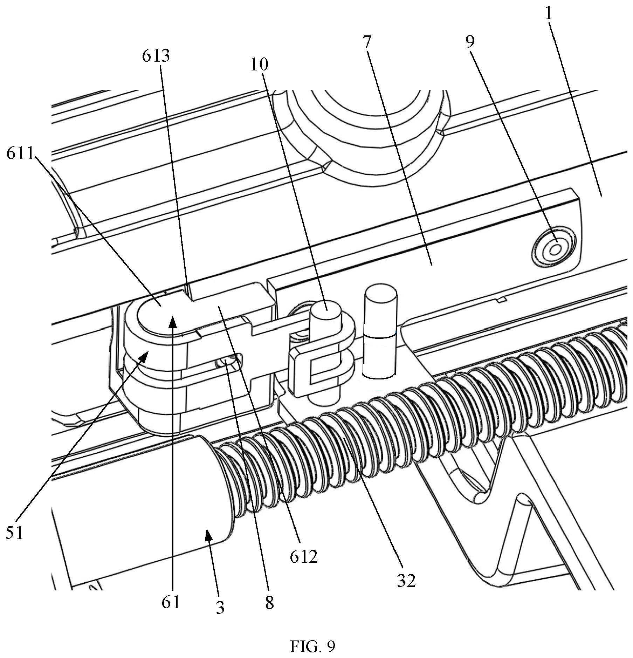

As shown in FIGS. 1 to 9, the present example provides a collapsible energy-absorbing mechanism for an electrically adjustable steering column, the collapsible energy-absorbing mechanism comprising a driving mechanism 3, a sliding component 4, a metal strip 5, and a guide holder 6. Therein, the sliding component 4 is slidably connected to the driving mechanism 3, and the sliding component 4 is connected to one end of the metal strip 5 by means of a bolt 10; a guide holder 6 is sleeved on the other end of the metal strip 5, and the guide holder 6 is fixedly connected to the upper column 1 by means of a rivet 8. The driving mechanism 3 comprises a motor 31 and a screw rod 32. The sliding component 4 is sleeved on the screw rod 32, and the sliding component 4 is provided with an internal thread that engages with the screw rod 32. When the motor 31 is started, the motor 31 drives the screw rod 32 to rotate, such that the sliding component 4 can slide relative to the screw rod 32. When the motor 31 is not started, the sliding component 4 remains stationary relative to the screw rod 32.

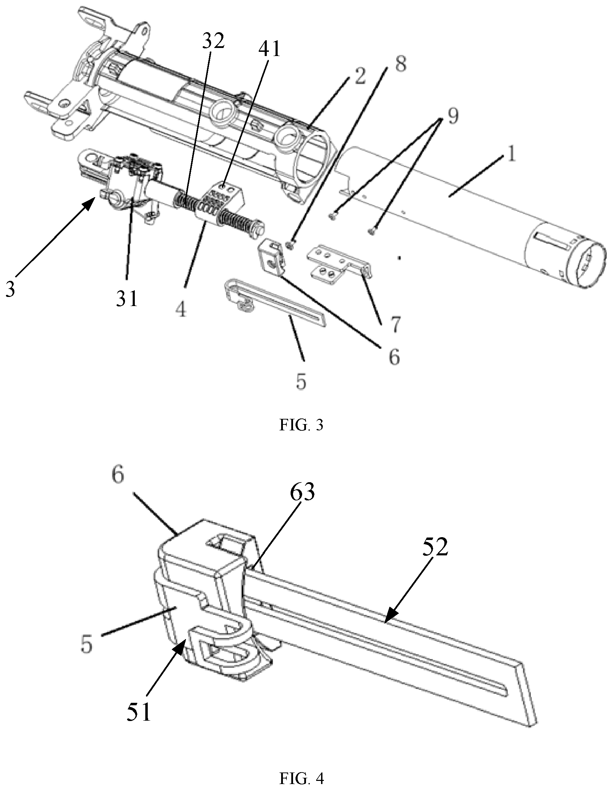

As shown in FIG. 3, FIG. 5, and FIG. 8, the sliding component 4 is provided with a mounting hole 41 for the bolt 10 to pass through; preferably, two mounting holes 41 are provided for two bolts 10 to pass through.

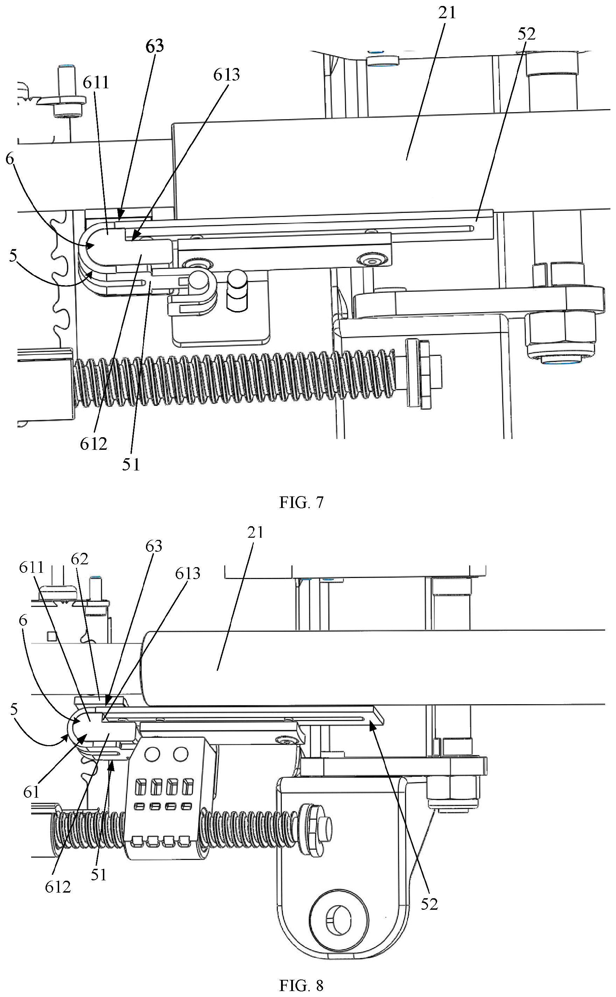

The metal strip 5 is provided as a "J"-shaped structure. One end of the metal strip 5 is bent outward and forms a U-shaped hollow structure, and the bolt 10 pass through the hollow structure to be fixedly connected to a bottom of the sliding component 4 through the mounting hole 41, which is equivalent to one end of the metal strip 5 being hooked onto the bolt 10. The other end of the metal strip 5 is provided as a flat structure, and an obround hole is provided transversely in the a middle of the flat structure. Correspondingly, the guide holder 6 is sleeved on the flat structure of the metal strip 5, as shown in FIG. 4 and FIG. 8.

Therein, since one end of the metal strip 5 is connected to the sliding component 4, when the sliding component 4 slides relative to the screw rod 32 under the action of the driving mechanism 3, it also drives the metal strip 5 to move.

The guide holder 6 is provided as a U-shaped structure and the guide holder 6 is sleeved transversely on the other end of the metal strip 5, and the rivet 8 passes through both the guide holder 6 and the other end of the metal strip 5 to be fixedly connected to the upper column 1.

As shown in FIG. 3 and FIG. 5 to FIG. 9, the rivet 8 passes through the obround hole of the metal strip 5 to fix the guide holder 6 to the upper column 1. Here, the rivet 8 passing through the metal strip 5 means that the rivet 8 traverses the obround hole of the metal strip 5. That is, the obround hole needs to provide clearance for the rivet 8, and the metal strip 5 itself is not directly connected to the guide holder 6.

As shown in FIGS. 3, 5, and 6, an outer side of a lower portion of the sliding component 4 is connected to one end of a fixing bracket 7 by means of a bolt 10, and the other end of the fixing bracket 7 is fixedly connected to the upper column 1 by means of a fastener 9.

A lower column 2 is sleeved on an outer side of the upper column 1, and a hollow slot is provided on the lower column 2.

The fixing bracket 7 is provided as a U-shaped structure, wherein an upper portion of the fixing bracket 7 wraps around the outer side of the lower portion of the sliding component 4, and a bottom of the fixing bracket 7 is fixedly connected to the upper column 1 by means of a fastener 9.

At least one fastener 9 is provided.

The guide holder 6 is fixedly connected to the upper column 1 by means of the rivet 8; one end of the metal strip 5 is inserted into an interior of the guide holder 6, and the other end is connected to the sliding component 4 on the driving mechanism 3 through engagement with the bolt 10. The sliding component 4 on the driving mechanism 3 is connected to the fixing bracket 7 by means of the bolt 10, and the fixing bracket 7 is connected to the upper column 1 by means of one or more fasteners 9. When the motor of the driving mechanism 3 is started, it drives the sliding component 4 to slide relative to the screw rod 32. Since the sliding component 4 is fixed to the upper column 1 by means of the fixing bracket 7 and the other end of the metal strip 5 is connected to the sliding component 4 by means of the bolt 10, the sliding of the sliding component 4 relative to the screw rod 32 drives the upper column 1 to move relative to the lower column 2. Correspondingly, the guide holder 6 moves along with the upper column 1 because it is fixed thereto, and the metal strip 5 also moves along because it is connected to the sliding component 4.

As shown in FIG. 3 and FIG. 5 to FIG. 9, the metal strip 5 and the guide holder 6 each have a portion located on an outer side of the upper column 1 and another portion located on an inner side of the upper column 1. For convenience of description, the portion of the metal strip 5 located on the outer side of the upper column 1 is referred to as a first strip portion 51, and the portion located on the inner side of the upper column 1 is referred to as a second strip portion 52. Correspondingly, the portion of the guide holder 6 located on the outer side of the upper column 1 is referred to as a first guide portion 61, and the portion located on the inner side of the upper column 1 is referred to as a second guide portion 62. Therein, the rivet 8 passes through the first guide portion 61 to connect with the upper column 1. The first guide portion 61 has an arcuate section 611 and a flat section 612. The arcuate section 611 and the flat section 612 define a stepped section 613 for engaging with a wall surface of the upper column 1. The rivet 8 passes through the flat section 612 to connect with the upper column 1. In appearance, the first strip portion 51 wraps around an exterior of the first guide portion 61. A channel 63 for the second strip portion 52 to pass through is defined between the first guide portion 61 and the second guide portion 62. The second strip portion 52 passes through the channel 63 and is located between an inner wall of the upper column 1 and a central shaft 21.

On this basis, when the electrically adjustable column is powered on for adjustment, the sliding component 4 on the driving mechanism 3 drives the fixing bracket 7 by means of the bolt 10, and the fixing bracket 7 drives the upper column 1 to slide within the lower column 2 by means of the fastener 9. Correspondingly, the metal strip 5 and the guide holder 6 also move along. During this process, the metal strip 5 and the guide holder 6 merely move along, meaning that the guide holder 6 does not act upon the metal strip 5, the metal strip 5 does not deform due to force, and the metal strip 5 has not yet performed its function. When the driving mechanism 3 is not started, the sliding component 4 remains stationary relative to the screw rod 32. Correspondingly, the metal strip 5 is also relatively stationary. As the upper column 1 and the fixing bracket 7 remain connected, the fixing bracket 7 and the upper column are also relatively stationary. When a vehicle collision occurs, the upper column 1 is subjected to an impact. As such, the upper column 1 drives the fixing bracket 7 to move by means of the fastener 9. The fixing bracket 7 is connected to the sliding component 4 on the driving mechanism 3 by means of the bolt 10. When the collision force is sufficiently large (i.e., the collapsible energy-absorbing mechanism is in a collapsible energy-absorbing mode), the fastener 9 on the fixing bracket 7 will break, causing the fixing bracket 7 to separate from the upper column 1. The upper column 1 drives the guide holder 6 to slide, and the guide holder 6 acts upon the first strip portion 51 of the metal strip 5 by means of the arcuate section 611, thereby being able to continuously straighten the curl of the metal strip 5, such that more and more of the metal strip located on the inner side of the upper column 1 is positioned on the outer side of the upper column 1 through the curling action of the guide holder 6. That is, the first strip portion 51 becomes increasingly longer and the second strip portion 52 becomes increasingly shorter, achieving the collapsible energy-absorbing function through the curling and straightening of the metal strip 5.

That is to say, in the present disclosure, when the electrically adjustable column is powered on for adjustment (i.e., the collapsible energy-absorbing mechanism is in a power-on adjustment mode), the guide holder 6 does not act upon the metal strip 5, and the metal strip 5 does not deform due to force. The metal strip 5 deforms and functions under the action of the guide holder 6 only when the steering wheel is subjected to a collision and the collision force is relatively large, such that the upper column 1 is impacted, causing the fastener 9 connecting the fixing bracket 7 to the upper column 1 to break. That is to say, the realization of the adjustment function and the realization of the collapsible energy-absorbing function of this collapsible energy-absorbing mechanism are relatively independent. Therefore, when the collapsible energy-absorbing mechanism maintains the position of the steering wheel, the metal strip 5 will not deform due to external forces, which is conducive to ensuring the stability of the collapsible energy-absorbing function of the collapsible energy-absorbing mechanism, enabling the expected energy absorption effect to be achieved.

If the guide holder 6 were not provided, the end of the upper column 1 would directly impact and act upon the metal strip 5 when the impact force is relatively large, which would easily damage the metal strip 5 and also easily cause the metal strip 5 to be pulled irregularly, thereby affecting the realization of the collapsible energy-absorbing function. In the present example, the stepped section 613 in the first guide portion 61 of the guide holder 6 is able to engage with the upper column 1, such that the upper column 1 acts upon the metal strip 5 by means of the arcuate section 611; during the process of the metal strip 5 being pulled, the metal strip 5 is gradually straightened along the arcuate section 611, which is conducive to ensuring the realization of the collapsible energy-absorbing function. In addition, the channel 63 defined by the first guide portion 61 and the second guide portion 62 provides a passing space for the second strip portion 52 of the metal strip 5; meanwhile, the channel 63 is also able to exert a regularizing effect on the second strip portion 52, controlling it within a preset range and preventing the second strip portion 52 from colliding with external structures (such as the central shaft 21) due to irregular swinging during the process of the metal strip 5 being pulled, thereby providing further assurance of the realization of the collapsible energy-absorbing function.

The obround hole provided on the metal strip 5 is conducive to the metal strip 5 achieving the expected deformation under the action of the guide holder 6. In practice, the deformation capacity of the metal strip 5 may be adjusted by altering the width or length of the obround hole. Furthermore, the material of the metal strip 5 is preferably steel, and the material of the guide holder 6 is preferably plastic. Here, the metal strip 5 and the guide holder 6 employ different materials. When the guide holder 6 acts upon the metal strip 5, the guide holder 6 and the metal strip 5 come into close contact, and at the instant of collision between the guide holder 6 and the metal strip 5, a large amount of friction and heat are generated. If the metal strip 5 and the guide holder 6 were to employ the same material, sintering would easily occur during the violent friction between the metal strip 5 and the guide holder 6, thereby affecting the realization of the collapsible energy-absorbing function of the collapsible energy-absorbing mechanism.

The objective of the present disclosure is to provide a collapsible energy absorption for an electrically adjustable steering column during a vehicle collision, so as to reduce the degree of injury to a driver as much as possible. The collapsible energy-absorbing mechanism thereof is not subjected to the action of force during the process of power-on adjustment of the electrically adjustable steering column. When not powered on, the collapsible energy-absorbing mechanism is also not subjected to the action of force as the steering wheel is subjected to a force in any direction, thereby ensuring the independence of the collapsible energy-absorbing function and providing better stability for collapsible energy absorption during a vehicle collision.

The structure of the present application is capable of absorbing impact energy during a vehicle collision and reducing the possibility of injury to a driver; moreover, the collapsible energy-absorbing mechanism is of a simple structure, saves arrangement space, and functions independently.

Although specific embodiments of the present disclosure have been described above, it should be understood by those skilled in the art that these are merely illustrative, and various changes or modifications may be made to these embodiments without departing from the principles and essence of the present disclosure. Therefore, the scope of protection of the present disclosure shall be defined by the appended claims.

## Claims

1. A collapsible energy-absorbing mechanism for an electrically adjustable steering column, comprising an upper column (1), a lower column (2), and a driving mechanism (3), wherein a sliding component (4) is slidably connected to the driving mechanism (3), **characterized in that** the collapsible energy-absorbing mechanism further comprises a metal strip (5) and a guide holder (6), wherein the sliding component (4) is connected to one end of the metal strip (5) by means of a bolt (10), and the guide holder (6) is sleeved on the other end of the metal strip (5) and fixedly connected to the upper column (1) by means of a rivet (8).

2. A collapsible energy-absorbing mechanism for an electrically adjustable steering column, comprising an upper column (1), a lower column (2), and a driving mechanism (3), wherein a sliding component (4) is slidably connected to the driving mechanism (3), **characterized in that** the collapsible energy-absorbing mechanism further comprises a metal strip (5) and a guide holder (6);
the sliding component (4) is connected to one end of the metal strip (5), and the guide holder (6) is sleeved on the other end of the metal strip (5) and fixedly connected to the upper column (1);
wherein the collapsible energy-absorbing mechanism has a power-on adjustment mode and a collapsible energy-absorbing mode;
when the collapsible energy-absorbing mechanism is in the power-on adjustment mode, the sliding component (4) is connected to the upper column (1), and the driving mechanism (3) drives the sliding component (4) to slide so as to drive the upper column (1) to slide synchronously relative to the lower column (2), during which the metal strip (5) moves along with the sliding component (4), and the guide holder (6) moves along with the upper column (1), as such the metal strip (5) is in an initial state;
if an impact force subjected by the upper column (1) exceeds a preset range and when the collapsible energy-absorbing mechanism is in the power-on adjustment mode, the sliding component (4) becomes disconnected from the upper column (1), and the upper column (1) acts upon the metal strip (5) by means of the guide holder (6) to cause the metal strip (5) to deform.

3. The collapsible energy-absorbing mechanism for the electrically adjustable steering column according to claim 1, **characterized in that** the sliding component (4) is connected to one end of the metal strip (5) by means of the bolt (10), and the guide holder (6) is fixedly connected to the upper column (1) by means of the rivet (8).

4. The collapsible energy-absorbing mechanism for the electrically adjustable steering column according to claim 1 or 3, **characterized in that** the metal strip (5) is provided as a "J"-shaped structure, wherein one end of the metal strip (5) is bent outward and is provided as a U-shaped hollow structure, and the bolt (10) passes through the hollow structure to be fixedly connected to a bottom of the sliding component (4); the other end of the metal strip (5) is provided as a flat structure, and an obround hole is provided transversely in a middle of the flat structure.

5. The collapsible energy-absorbing mechanism for the electrically adjustable steering column according to claim 4, **characterized in that** the metal strip (5) and the guide holder (6) each have a part located on an outer side of the upper column (1) and another part located on an inner side of the upper column (1);
the part of the metal strip (5) located on the outer side of the upper column (1) is a first strip portion (51), and the part of the metal strip (5) located on the inner side of the upper column (1) is a second strip portion (52); the part of the guide holder (6) located on the outer side of the upper column (1) is a first guide portion (61), and the part of the guide holder (6) located on the inner side of the upper column (1) is a second guide portion (62);
the rivet (8) passes through the first guide portion (61) to connect with the upper column (1); the first guide portion (61) comprises an arcuate section (611) and a flat section (612), wherein the arcuate section (611) and the flat section (612) define a stepped section (613) for engaging with a wall surface of the upper column (1); the rivet (8) passes through the flat section (612) to connect with the upper column (1);
wherein the first strip portion (51) wraps around an exterior of the first guide portion (62).

6. The collapsible energy-absorbing mechanism for the electrically adjustable steering column according to claim 5, **characterized in that** the collapsible energy-absorbing mechanism further comprises a central shaft (21), wherein a channel (63) is defined between the first guide portion (61) and the second guide portion (62) for the second strip portion (52) to pass through, and the second strip portion (52) passes through the channel (63) and is located between an inner wall of the upper column (1) and the central shaft (21).

7. The collapsible energy-absorbing mechanism for the electrically adjustable steering column according to claim 5 or 6, **characterized in that** the collapsible energy-absorbing mechanism further comprises a fixing bracket (7), wherein an outer side of a lower portion of the sliding component (4) is connected to one end of the fixing bracket (7) by means of the bolt (10), and the other end of the fixing bracket (7) is fixedly connected to the upper column (1) by means of a fastener (9);
wherein, when an impact force subjected by the upper column (1) exceeds a preset range, the fastener (9) is capable of fracturing to release the connection between the fixing bracket (7) and the upper column (1), so as to release the connection between the sliding component (4) and the upper column (1); as such, the upper column (1) drives the guide holder (6) to slide, and the guide holder (6) acts upon the first strip portion (51) by means of the arcuate section (61) to continuously straighten a curl of the metal strip (5), such that the first strip portion (51) lengthens and the second strip portion (52) shortens.

8. The collapsible energy-absorbing mechanism for the electrically adjustable steering column according to any one of claims 1 and 3 to 7, **characterized in that** the guide holder (6) is provided as a U-shaped structure and is sleeved transversely on the other end of the metal strip (5), and the rivet (8) passes through both the guide holder (6) and the other end of the metal strip (5) to be fixedly connected to the upper column (1).

9. The collapsible energy-absorbing mechanism for the electrically adjustable steering column according to any one of claims 1 and 3 to 6, **characterized in that** the collapsible energy-absorbing mechanism further comprises a fixing bracket (7), wherein an outer side of a lower portion of the sliding component (4) is connected to one end of the fixing bracket (7) by means of the bolt (10), and the other end of the fixing bracket (7) is fixedly connected to the upper column (1) by means of a fastener (9);
wherein, when an impact force subjected by the upper column (1) exceeds a preset range, the fastener (9) is capable of fracturing to release the connection between the fixing bracket (7) and the upper column (1), so as to release the connection between the sliding component (4) and the upper column (1).

10. The collapsible energy-absorbing mechanism for the electrically adjustable steering column according to claim 9, **characterized in that** the sliding component (4) is provided with a mounting hole (41) for the bolt (10) to pass through, and the number of the mounting hole (41) is two for two of the bolts (10) to pass through.

11. The collapsible energy-absorbing mechanism for the electrically adjustable steering column according to any one of claims 1 to 10, **characterized in that** the lower column (2) is sleeved on an outer side of the upper column (1), and a hollow slot is provided on the lower column (2).

12. The collapsible energy-absorbing mechanism for the electrically adjustable steering column according to any one of claims 7 to 11, **characterized in that** the fixing bracket (7) is provided as a U-shaped structure, wherein an upper portion of the fixing bracket (7) wraps around an outer side of a lower portion of the sliding component (4), and a bottom of the fixing bracket (7) is fixedly connected to the upper column (1) by means of a fastener (9).

13. The collapsible energy-absorbing mechanism for the electrically adjustable steering column according to claim 12, **characterized in that** at least one fastener (9) is provided.

14. The collapsible energy-absorbing mechanism for the electrically adjustable steering column according to any one of claims 1 to 13, **characterized in that** the guide holder (6) and the metal strip (5) are made of different materials.

15. The collapsible energy-absorbing mechanism for the electrically adjustable steering column according to claim 14, **characterized in that** a material of the guide holder (6) is steel, and a material of the metal strip (5) is plastic.
